# EUROPEAN PATENT SPECIFICATION

(11) **EP 3 795 801 B1**
(45) Date of publication and mention of the grant of the patent: **28.10.2026**
(21) Application number: 20197018.3
(22) Date of filing: 18.09.2020
(51) Int. Cl.: F01D 5/34, B33Y 80/00, F02C 3/05

(54) **UNITIZED ROTOR ASSEMBLY**
INTEGRALE ROTORANORDNUNG
ENSEMBLE ROTOR UNITAIRE

(30) Priority: 20.09.2019 US 201916577385
(43) Date of publication of application: 24.03.2021
(73) Proprietor: RTX Corporation, Farmington, CT 06032 (US)
(72) Inventor: BINEK, Lawrence A., Glastonbury, CT Connecticut 06033 (US); GARCIA, Jesus A., San Diego, CA California 92124 (US); BUTCHER, Evan J., Suffield, CT Connecticut 06078 (US); ZARANDI, Faramarz, Vernon, CT Connecticut 06066 (US); KENNEDY, Matthew B., Vernon, CT Connecticut 06066 (US); BOY, Jesse R., Middletown, CT Connecticut 06457 (US)
(74) Representative: Dehns

(56) References cited:
- EP-A1- 3 364 040
- EP-A2- 3 415 718
- WO-A2-2004/046522
- US-A- 2 945 349
- US-A1- 2002 012 588
- US-A1- 2015 196 971
- US-A1- 2018 112 531

## Description

### BACKGROUND

The present disclosure relates generally to rotor assemblies. In particular, the present disclosure relates to additively manufactured rotor assemblies.

Turbojets use turbomachinery to generate thrust to propel an air vehicle. Turbojets utilize a rotor assembly typically including a compressor, a shaft, and a turbine. The compressor ingests ambient air and compresses the air to be diffused and then directed to the combustor for mixing of the compressed air and fuel for ignition and combustion. The resulting hot gas is then directed to the turbine to create power and thrust.

Manufacturing of the turbojet rotor assembly often includes procuring raw material for the three major components in the form of raw stock, forgings, or castings. The procured raw material for each component is then separately heat treated, and machined to final detailed dimensions. Each component is separately inspected and balanced individually. Lastly, the components are brought together and assembled, and balanced again as a rotor assembly. In some instances, the rotor assembly can be pre-spun to verify the integrity of any cast components due to susceptibility to sub-surface defects.

WO 2004/046522 discloses a unitary rotor shaft with turbine, compressor and shaft all fabricated from one piece of material.

US 2 945 349 A discloses a rotor shaft incorporating a turbine portion, compressor portion and shaft portion.

US 2002/012588 A1 discloses an integral rotor shaft incorporating a turbine portion, compressor portion and shaft portion.

EP 3364040 A1 discloses a rotor component and method for producing same.

### SUMMARY

In accordance with a first aspect of the disclosure, a method of making a rotor assembly of a turbojet engine for an aircraft is provided as recited in claim 1.

In accordance with a second aspect of the disclosure, a rotor assembly of a turbojet engine for an aircraft is provided as recited in claim 7.

Features of embodiments are recited in the dependent claims.

The present summary is provided only by way of example, and not limitation. Other aspects of the present disclosure will be appreciated in view of the entirety of the present disclosure, including the entire text, claims, and accompanying figures.

### BRIEF DESCRIPTION OF THE DRAWINGS

FIG. 1 is a cross-section view of a first rotor assembly which is not covered by the claims.
FIG. 2 is a cross-section view of a second rotor assembly according to the invention.

While the above-identified figures set forth one or more embodiments of the present disclosure, other embodiments are also contemplated, as noted in the discussion. In all cases, this disclosure presents embodiments by way of representation and not limitation. It should be understood that numerous other modifications and embodiments can be devised by those skilled in the art, which fall within the scope of the principles of the disclosure. The figures may not be drawn to scale, and applications and embodiments of the present disclosure may include features and components not specifically shown in the drawings.

### DETAILED DESCRIPTION

This disclosure presents an additively manufactured rotor assembly that results from integrating a compressor, turbine, and shaft into a single additively manufactured part requiring a minimum of material, heat treatment, machining, assembly, and balancing to complete the part. The additively manufactured rotor assembly, by virtue of eliminating the cast turbine wheel, will eliminate premature in-service failures from subsurface casting defects of the turbine wheel.

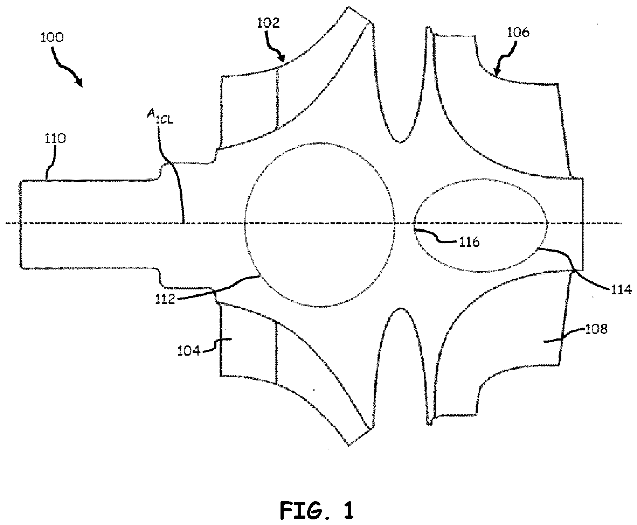

FIG. 1 is a cross-section view of first rotor assembly not covered by the claims and shows first compressor portion 102 (with first compressor blades 104), first turbine portion 106 (with first turbine blades 108), first shaft portion 110, first cavity 112, second cavity 114, first structural member 116, and first centerline axis A_{1CL}.

First rotor assembly 100 is a single additively manufactured part including first compressor portion 102, first turbine portion 106, and first shaft portion 110. In one example, first rotor assembly 100 is made from a laser beam melting or electron beam melting layer-by-layer additive manufacturing process. First rotor assembly 100 can be formed, at least in part, of a nickel based alloy capable of high strength at high operating temperatures (e.g., an age hardening austenitic (face-centred cubic) nickel-based superalloy) such as Inconel 718, Waspaloy, Haynes 282, Inconel 713, Inconel 738, Mar M 247, or Inconel 792.

First compressor portion 102 is a compressor rotor. In the illustrated embodiment, first compressor portion 102 is a radial compressor. First compressor blades 104 and first turbine blades 108 are airfoil blades. First turbine portion 106 is a turbine rotor. In this non-limiting embodiment, first turbine portion 106 is a radial turbine. First shaft portion 110 is a cylinder (with or without a hollow portion) of solid material. First cavity 112 and second cavity 114 are pockets or voids. In this example, first cavity 112 is approximately spherical and second cavity is approximately ellipsoidal. First structural member 116 is a piece or section of solid material disposed substantially in a plane transverse (e.g., orthogonal) to first centerline axis A_{1CL} and situated between first cavity 112 and second cavity 114. First centerline axis A_{1CL} is an imaginary axis about which first rotor assembly 100 rotates. First and second cavities 112 and 114 can be inter-connected to evacuate entrapped powder particles through another channel running through a hub of first compressor portion 102 or first turbine portion 106.

In one non-limiting embodiment, first rotor assembly 100 is part of a turbojet engine for an aircraft. In this example, first rotor assembly 100 is built via layer-by-layer additive manufacturing such that first compressor portion 102, first turbine portion 106, and first shaft portion 110 are integrally formed as a single, unitized piece of material. First compressor portion 102 is integrally formed with and connected to first turbine portion 106. First compressor blades 104 are disposed radially outward from first centerline axis A_{1CL} along an outer radial perimeter of first compressor portion 102. First turbine portion 106 is integrally formed with and connected to both first compressor portion 102 and to first shaft portion 110. First turbine blades 108 are disposed radially outward from first centerline axis A_{1CL} along an outer radial perimeter of first turbine portion 106.

First shaft portion 110 is integrally formed with and connected to first compressor portion 102. In this example, first cavity 112 is disposed inside of first compressor portion 102 and second cavity 114 is disposed inside of first turbine portion 106. First structural member 116 is disposed between first compressor portion 102 and first turbine portion 106. In this example, first compressor portion 102, first turbine portion 106, first shaft portion 110, first cavity 112, and second cavity 114 are disposed coaxially about first centerline axis A_{1CL}.

During operation of first rotor assembly 100, first compressor portion 102 ingests ambient air and compresses the air to be diffused and then directed to a combustor for mixing of the compressed air and fuel for ignition and combustion. The resulting hot gas is then directed to first turbine portion 106 to create power and thrust for the aircraft turbojet engine. First shaft portion 110 transfers torque to and from first rotor assembly 100 between other components of the aircraft turbojet engine. First cavity 112 and second cavity 114 provide for a reduction in mass and weight for first rotor assembly 100. First structural member 116 provides structural support to both first compressor portion 102 and to first turbine portion 106. In this example, first structural member 116 includes an average section stress less than a yield tensile strength of the material of first rotor assembly 100 at a maximum operating temperature.

Utilizing additive manufacturing to build first rotor assembly 100 instead of casting processes, eliminates premature in-service failures from turbine wheel subsurface casting defects that can occur with casting processes. The single material selected for the additive manufacturing of first rotor assembly 100 meets the strength and stiffness requirements of each of first compressor portion 102, first turbine portion 106, and first shaft portion 110. The nickel based alloy material of first rotor assembly 100 is strong enough to support first turbine portion 106, which typically experiences the greatest strain and highest temperatures as compared to first compressor portion 102 and first shaft portion 110. The creep rupture properties (ability to maintain high strength at high temperature) of the nickel based alloy material of first rotor assembly 100 (e.g., specifically for first turbine portion 106) extends the life of first rotor at service temperature and, hence, maximizes the operating turbine inlet temperature and therefore the specific power density required by first rotor assembly 100. The nickel based alloy material selected shall be conducive to additive manufacturing in regards to weldability, defect minimization, and dimensional stability and precision. A heat treatment can be applied to first rotor assembly 100. For example, a hot isostatic press process can be applied to first rotor assembly 100. Additionally, an abrasive flow machining process can be applied to first rotor assembly 100 in order to smooth a portion of a surface of first rotor assembly 100.

First rotor assembly 100 also costs less to manufacture than a non-additively manufactured rotor assembly due to additive manufacturing technology that reduces material processing, machining, scrap rate, and assembly compared to a typical multipart rotor assembly.

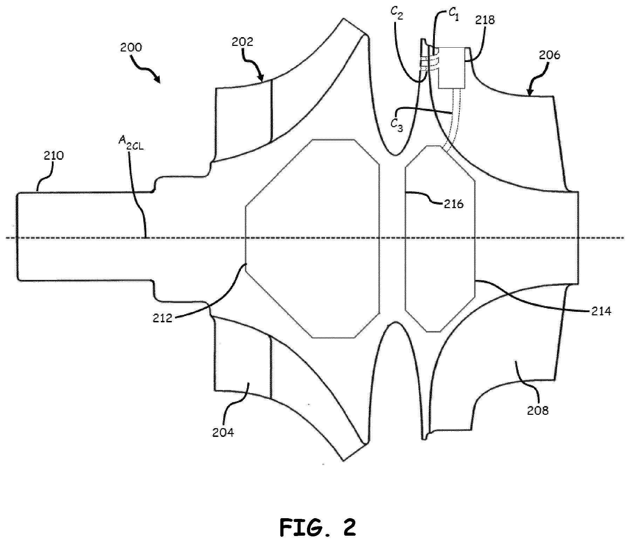

FIG. 2 is a cross-section view of second rotor assembly 200 which is covered by the claims and shows second compressor portion 202 (with second compressor blades 204), second turbine portion 206 (with second turbine blades 208), second shaft portion 210, first cavity 212, second cavity 214, second structural member 216, slot 218, first channel C₁, second channel C₂, third channel C₃, and second centerline axis A_{2CL}.

The structure and operation of second rotor assembly 200 generally parallels first rotor assembly 100, discussed above. For example, regarding second rotor assembly 200 and its components, second rotor assembly 200 operates in the same or substantially the same manner as that of first rotor assembly 100 and its components discussed with respect to FIG. 1. Accordingly, the above description of first rotor assembly 100 and its components also extends to second rotor assembly 200 and its corollary components. As such, because the description of first rotor assembly 100 and its components can be used to describe second rotor assembly 200 and its components, a full description of second rotor assembly 200 is herein omitted in the interest of avoiding undue repetition.

In this example, first cavity 212 and second cavity 214 have a polygonal cross-section shape. In other embodiments, first cavity 212 and/or second cavity 214 can include any shape. Slot 218 is a cutout or aperture. First channel C₁, second channel C₂, and third channel C₃ are fluidic passages. In this example, a single slot 218 is disposed in and cut into a radially outer portion of one of second turbine blades 208. In other examples, more than one slot 218 can be disposed in second turbine blades 208 and/or in second compressor blades 204.

First channel C₁ and second channel C₂ are fluidly connected to and extend between an edge of slot 218 and an end-face of second turbine portion 206. Third channel C₃ is fluidly connected to and extends between second cavity 214 and slot 218. In other non-limiting embodiments, other channels can fluidly inter-connect any of first cavity 212, second cavity 214, and/or slot 218 by passing through any portions of second compressor portion 202, second turbine portion 206, second shaft portion 210, and second structural member 216.

In one non-limiting embodiment, a method of making second rotor assembly 200 includes building second rotor assembly 200 via a layer-by-layer additive manufacturing process. Second compressor portion 202 can be formed and second turbine portion 206 can be integrally formed with second compressor portion 202. Second shaft portion 210 can be integrally formed with second compressor portion 202. A material of second rotor assembly can include a nickel based alloy.

An internal cavity, such as first cavity 212, can be formed with second rotor assembly 200. The internal cavity can include a plurality of internal cavities. Second structural member 216 can be formed within second rotor assembly 200 and can be positioned between and separating two (e.g., first cavity 212 and second cavity 214) of the plurality of cavities apart from each other. Second structural member can be disposed between second compressor portion 202 and second turbine portion 206. One of first, second, and third channels C₁-C₃ can be formed in second rotor assembly 200.

Features can be formed on a surface of first channel C₁, the feature configured to change a behavior of a flow of fluid passing through first channel C₁. Hot isostatic pressing can be applied to second rotor assembly 200. A heat treatment can be applied to second rotor assembly 200. An abrasive flow machining process can be applied to second rotor assembly 200 in order to smooth a portion of a surface of second rotor assembly 200. The layer-by-layer additive manufacturing process can include laser beam melting or electron beam melting. The nickel based alloy material of second rotor assembly 200 can include inconel 718, Waspaloy, Haynes 282, Inconel 713, Inconel 738, Mar M 247, or Inconel 792. After second rotor assembly 200 is built, second rotor assembly can be balanced via sacrifical material removal at a designated location on second rotor assembly such as on an end-face of one of second compressor portion 202 or second turbine portion 206.

The use of slot 218 and first through third channels C₁-C₃ provides the benefit of reducing turbine tip metal temperatures and allows for higher turbine inlet temperatures and therefore higher power density. Additionally, the reduced turbine tip metal temperatures from first through third channels C₁-C₃ expand the number of candidate alloys available, and thus more compatible alloys for making first and second rotor assemblies 100 and 200. Likewise, first through third channels C₁-C₃ can provide the benefit of avoiding distortion during the hot isostatic pressing application or to evacuate entrapped powder forming during the additive manufacturing build process.

Similar to first rotor assembly 100, the application of hot isostatic pressing provides the benefit of minimizing an internal porosity of second rotor assembly 200. Similar to first rotor assembly 100, the application of a heat treatment provides the benefit of strengthening the material of second rotor assembly 200. Similar to first rotor assembly 100, the application of abrasive flow machining enhances the aerodynamic performance and structural surface integrity of second rotor assembly 200.

It is intended that the invention not be limited to the particular embodiment(s) disclosed, but that the invention will include all embodiments falling within the scope of the appended claims.

## Claims

1. A method of making a rotor assembly (200) of a turbojet engine for an aircraft, the method comprising building, via layer-by-layer additive manufacturing, the rotor assembly ( 200), wherein building the rotor assembly (200) comprises:
forming a turbine portion (206);
forming a compressor portion (202) integrally with the turbine portion (206);
forming a shaft portion (210) integrally with the compressor portion (102; 202), wherein a material of the rotor assembly (200) comprises a nickel based alloy; **characterised by**
forming a plurality of internal cavities (212, 214) within the rotor assembly (200),
forming a structural member (216) within the rotor assembly (200), wherein the structural member (216) is positioned between and separates two of the plurality of internal cavities (212, 214) apart from each other and the structural member (216) is disposed between the turbine portion (206) and the compressor portion (202); and
forming a cooling passage (C₁, C₂, C₃) in the rotor assembly (200), the cooling passage (C₁, C₂, C₃) being fluidly connected to two of the plurality of internal cavities (212, 214) or to at least one of the plurality of internal cavities (212, 214) and a slot (218) disposed in a radially outer portion of a turbine blade (208) or a compressor blade (204).

2. The method of claim 1, further comprising forming a feature on a surface of a first cooling passage (C₁), wherein the feature changes a behavior of a flow of fluid passing through the first cooling passage (C₁).

3. The method of claim 1 or 2, further comprising applying a heat treatment to the rotor assembly (200).

4. The method of claim 1, 2 or 3, further comprising hot isostatic pressing the rotor assembly (200).

5. The method of any preceding claim, further comprising applying an abrasive flow machining process to the rotor assembly (200) to smooth a portion of a surface of the rotor assembly (200).

6. The method of any preceding claim, wherein the layer-by-layer additive manufacturing comprises laser beam melting or electron beam melting.

7. A rotor assembly (200) of a turbojet engine for an aircraft, the rotor assembly ( 200) comprising:
a turbine portion (206);
a compressor portion (202) integrally formed with the turbine portion (206);
a shaft portion (210) integrally formed with the compressor portion (202), wherein a material of the rotor assembly (200) comprises a nickel based alloy;
**characterised by**:
a plurality of internal cavities (212, 214) within the rotor assembly (200),
a structural member (216) within the rotor assembly (200), wherein the structural member (216) is positioned between and separates two of the plurality of internal cavities (212, 214) apart from each other and the structural member (216) is disposed between the turbine portion (206) and the compressor portion (202); and
a cooling passage (C₁, C₂, C₃) in the rotor assembly (200), the cooling passage (C₁, C₂, C₃) being fluidly connected to two of the plurality of internal cavities (212, 214) or to at least one of the plurality of internal cavities (212, 214) and a slot (218) disposed in a radially outer portion of a turbine blade (208) or a compressor blade (204).

8. The rotor assembly (200) of claim 7, further comprising a feature on a surface of a first cooling passage (C₁), wherein the feature changes a behavior of a flow of fluid passing through the first cooling passage (C₁).

9. The method or the rotor assembly (200) of claim 7 or 8, wherein the nickel based alloy material comprises inconel 718, Waspaloy, Haynes 282, Inconel 713, Inconel 738, Mar M 247, or Inconel 792.

## Patentansprüche

1. Ein Verfahren zur Herstellung einer Rotorbaugruppe (200) eines Strahltriebwerks für ein Luftfahrzeug, wobei das Verfahren umfasst:
Aufbauen der Rotorbaugruppe (200) mittels schichtweiser additiver Fertigung, wobei
das Aufbauen der Rotorbaugruppe (200) umfasst:
Bilden eines Turbinenteil (206);
Bilden eines Kompressorteils (202) integral mit dem Turbinenteil (206);
Bilden eines Wellenteil (210) integral mit dem Kompressorteil (102; 202), wobei ein Material der Rotorbaugruppe (200) eine Nickelbasierte Legierung umfasst, **gekennzeichnet durch** Bilden einer Vielzahl von internen Hohlräumen (212, 214) innerhalb der Rotorbaugruppe (200),
Bilden eines Strukturelements (216) innerhalb der Rotorbaugruppe (200), wobei das Strukturelement
(216) zwischen zwei der Vielzahl von internen Hohlräumen (212,
214) positioniert ist und diese voneinander trennt und das Strukturelement (216) zwischen dem Turbinenteil
(206) und dem Kompressorteil (202) angeordnet ist; und
Bilden einer Kühlpassage (C₁, C₂, C₃) in der Rotorbaugruppe (200), wobei die Kühlpassage (C₁, C₂, C₃) fluidisch mit zwei der Vielzahl von internen Hohlräumen (212, 214) oder mit mindestens einem der Vielzahl von internen Hohlräumen (212, 214) und einem Schlitz (218), der in einem radial äußeren
Teil einer Turbinenschaufel (208) oder einer Kompressorschaufel (204) angeordnet ist, verbunden ist.

2. Das Verfahren nach Anspruch 1, weiter umfassend das Bilden eines Merkmals auf einer Oberfläche einer ersten Kühlpassage
(C₁), wobei das Merkmal ein Verhalten eines durch die erste
Kühlpassage (C₁) strömenden Fluids ändert.

3. Das Verfahren nach Anspruch 1 oder 2, weiter umfassend das Anwenden einer Wärmebehandlung auf die Rotorbaugruppe (200).

4. Das Verfahren nach Anspruch 1, 2 oder 3, weiter umfassend das heiß-isostatische Pressen der Rotorbaugruppe (200).

5. Das Verfahren nach einem der vorhergehenden Ansprüche, weiter umfassend das Anwenden eines abrasiven Strömungsbearbeitungsverfahrens
auf die Rotorbaugruppe (200), um einen Teil einer Oberfläche der Rotorbaugruppe (200) zu glätten.

6. Das Verfahren nach einem der vorhergehenden Ansprüche, wobei die schichtweise additive Fertigung
Laserstrahlschmelzen oder Elektronenstrahlschmelzen umfasst.

7. Eine Rotorbaugruppe (200) eines Strahltriebwerks für ein Luftfahrzeug, wobei die Rotorbaugruppe (200)
umfasst: einen Turbinenteil (206);
einen Kompressorteil (202), der integral mit dem Turbinenteil (206) gebildet ist;
einen Wellenteil (210), der integral mit dem Kompressorteil (202) gebildet ist, wobei ein Material der Rotorbaugruppe (200) eine Nickelbasierte Legierung umfasst, **gekennzeichnet durch** eine Vielzahl von internen Hohlräumen (212, 214) innerhalb der Rotorbaugruppe (200),
ein Strukturelement (216) innerhalb der Rotorbaugruppe (200), wobei das Strukturelement (216) zwischen zwei der Vielzahl von internen Hohlräumen (212, 214) positioniert ist und diese voneinander trennt und das Strukturelement (216) zwischen dem Turbinenteil (206) und dem Kompressorteil (202) angeordnet ist; und
eine Kühlpassage (C₁, C₂, C₃) in der Rotorbaugruppe (200), wobei die Kühlpassage (C₁, C₂, C₃) fluidisch mit zwei der Vielzahl von internen Hohlräumen (212, 214) oder mit mindestens einem der Vielzahl von internen Hohlräumen (212, 214) und einem Schlitz (218), der in einem radial äußeren Teil einer
Turbinenschaufel (208) oder Kompressorschaufel (204) angeordnet ist, verbunden ist.

8. Die Rotorbaugruppe (200) nach Anspruch 7, weiter umfassend ein Merkmal auf einer Oberfläche einer ersten
Kühlpassage (C₁), wobei das Merkmal ein Verhalten eines durch die
erste Kühlpassage (C₁) strömenden Fluids ändert.

9. Das Verfahren oder die Rotorbaugruppe (200) nach Anspruch 7 oder 8, wobei das Nickelbasierte Legierungsmaterial Inconel 718, Waspaloy, Haynes 282, Inconel 713, Inconel 738, Mar M 247 oder Inconel 792 umfasst.

## Revendications

1. Procédé de fabrication d'un ensemble rotor (200) d'un moteur à réaction pour un aéronef, le procédé
comprenant la construction, par fabrication additive couche par couche, de l'ensemble rotor (200), dans lequel
la construction de l'ensemble rotor (200) comprend :
la formation d'une partie turbine (206) ;
la formation d'une partie compresseur (202) intégralement avec la partie turbine (206) ; la formation d'une partie arbre (210) intégralement avec la partie compresseur (102, 202), où un matériau de l'ensemble rotor (200) comprend un alliage à base de nickel, **caractérisé par** 10 la formation d'une pluralité de cavités internes (212, 214) dans l'ensemble rotor (200), la formation d'un élément structurel (216) dans l'ensemble rotor (200), où l'élément structurel (216) est positionné entre et sépare deux de la pluralité de cavités internes (212,
214) l'une de l'autre et l'élément structurel (216) est disposé entre la partie turbine (206) et la partie compresseur (202) ; et
la formation d'un passage de refroidissement (C₁, C₂, C₃) dans l'ensemble rotor (200), le passage de refroidissement
(C₁, C₂, C₃) étant fluidiquement connecté à deux de la pluralité de cavités internes (212, 214) ou à au moins une de la pluralité de cavités internes (212, 214) et une fente (218) disposée dans une partie radialement externe
d'une aube de turbine (208) ou d'une aube de compresseur (204).

2. Procédé selon la revendication 1, comprenant en outre la formation d'une caractéristique sur une surface d'un premier passage
de refroidissement (C₁), où la caractéristique modifie un comportement d'un écoulement de fluide passant à travers le premier
passage de refroidissement (C₁).

3. Procédé selon la revendication 1 ou 2, comprenant en outre l'application d'un traitement thermique à l'ensemble
rotor (200).

4. Procédé selon la revendication 1, 2 ou 3, comprenant en outre la compression isostatique à chaud de l'ensemble rotor (200).

5. Procédé selon l'une quelconque des revendications précédentes, comprenant en outre l'application d'un procédé
d'usinage par écoulement abrasif à l'ensemble rotor (200) pour lisser une partie d'une surface de l'ensemble rotor (200).

6. Procédé selon l'une quelconque des revendications précédentes, dans lequel la fabrication additive couche par couche
comprend la fusion par faisceau laser ou la fusion par faisceau d'électrons.

7. Ensemble rotor (200) d'un moteur à réaction pour un aéronef, l'ensemble rotor (200) comprenant : une partie turbine (206) ;
une partie compresseur (202) formée intégralement avec la partie turbine (206) ;
une partie arbre (210) formée intégralement avec la partie compresseur (202), où un matériau de l'ensemble rotor (200) comprend un alliage à base de nickel, **caractérisé par**
une pluralité de cavités internes (212, 214) dans l'ensemble rotor (200),
un élément structurel (216) dans l'ensemble rotor (200), où l'élément structurel (216) est positionné entre et sépare deux de la pluralité de cavités internes (212, 214) l'une de l'autre et l'élément structurel (216) est disposé entre la partie turbine (206) et la partie compresseur (202) ; et un passage de refroidissement (C₁, C₂, C₃) dans l'ensemble rotor (200), le passage de refroidissement (C₁, C₂, C₃)
étant fluidiquement connecté à deux de la pluralité de cavités internes (212, 214) ou à au moins une de
la pluralité de cavités internes (212, 214) et une fente (218) disposée dans une partie radialement externe
d'une aube de turbine (208) ou d'une aube de compresseur (204).

8. Ensemble rotor (200) selon la revendication 7, comprenant en outre une caractéristique sur une surface d'un premier
passage de refroidissement (C₁), où la caractéristique modifie un comportement d'un écoulement de fluide passant à travers le premier passage de refroidissement (C₁).

9. Procédé ou ensemble rotor (200) selon la revendication 7 ou 8, dans lequel le matériau en alliage à base de nickel comprend l'Inconel 718, le Waspaloy, le Haynes 282, l'Inconel 713, l'Inconel 738, le Mar M 247, ou l'Inconel 792.
